# EUROPEAN PATENT APPLICATION

(11) **EP 2 385 528 A1**
(43) Date of publication of application: **09.11.2011**
(21) Application number: 11163525.6
(22) Date of filing: 21.04.2011
(51) Int. Cl.: G11B 27/10, G11B 27/28, G11B 27/32, G11B 27/34, G06F 3/048, G06F 17/30

(54) **Display device, display method, and program**

(30) Priority: 07.05.2010 JP 2010107358
(71) Applicant: Sony Corporation, Tokyo 108-0075 (JP)
(72) Inventor: Isozu, Masaaki, Minato-ku, Tokyo 108-0075 (JP); Tomonaga, Seishi, Minato-ku, Tokyo 108-0075 (JP)
(74) Representative: Ealey, Douglas Ralph

(57) **Abstract**

A method is provided for displaying thumbnail images corresponding to portions of content. The method comprises identifying a thumbnail image representing a portion of content. The method further comprises identifying an importance level of the content represented by the thumbnail image. The method further comprises selecting a display mode of the thumbnail image according to the determined importance level. The method further comprises displaying the thumbnail image according to the selected display mode.

## Description

The present disclosure relates to display devices, display methods, and programs for displaying thumbnails.

In recent years, there is greater number of digital broadcasting programs due to greater number of channels, and the moving image contents on the network are also exploding and a great number of moving images can now be easily reproduced. The content of the moving image content is generally expressed with one thumbnail. The user can thus speculate the content of the content to a certain extent before reproducing the content by looking at the thumbnail image.

However, the content of the moving image content may not be easily speculated by simply looking at the thumbnail when it is difficult to extract the appropriate thumbnail from the moving image content or when it is difficult to display all the moving image contents with the extracted plurality of appropriate thumbnails. As a result, troublesome effort and great amount of time are wasted to look for the desired scene in the desired moving image from the moving image content. Therefore, a means for comfortably browsing through the appropriate number of thumbnails showing the flowing of content of the content is desired to instantaneously determine the content of the moving image content.

Various techniques have been proposed from the related art as a means for extracting an appropriate thumbnail from the moving image content and enabling the desired scene to be easily searched. For instance, Japanese Patent Application Laid-Open No. 2002-27400 describes extracting a representative image in which a desired program or scene can be selected. In Japanese Patent Application Laid-Open No. 2002-27400, the still images are extracted using a video signal and are displayed in a list, where a method of easily searching for the moving image content is provided to the user.

Japanese Patent Application Laid-Open No. 2009-246722 relates to a method of extracting a thumbnail of a certain scene from the moving image content, where the thumbnail is extracted and displayed based on a plurality of rules that differ for every content so that the content of the content can be speculated to a certain extent by simply looking at the thumbnail image before reproducing the content.

However, Japanese Patent Application Laid-Open No. 2002-27400 is a technique for extracting only one representative image as a thumbnail, and does not provide a method for displaying the list of thumbnails representing the flow of content of the content in view of the importance of the scene, and the like. Thus, the content of the video is difficult to instantaneously and accurately grasp by the display of thumbnails in Japanese Patent Application Laid-Open No. 2002-27400.

Japanese Patent Application Laid-Open No. 2009-246722 relates to the technique of "extracting thumbnail" to accurately determine the content of the video. Thus, Japanese Patent Application Laid-Open No. 2009-246722 does not provide a method of displaying a list of thumbnails while changing the display method of the thumbnail showing an important scene from the display method of other thumbnails.

In light of the foregoing, it is desirable to provide a novel and improved display device, display method, and program capable of changing the display method of the thumbnail according to the degree of importance.

Various respective aspects and features of the invention are defined in the appended claims. Combinations of features from the dependent claims may be combined with features of the independent claims as appropriate and not merely as explicitly set out in the claims.

Accordingly, there is provided an apparatus for displaying thumbnail images corresponding to portions of content. The apparatus comprises an identifying unit for identifying a thumbnail image representing a portion of content, and an importance level of the portion of content represented by the thumbnail image. The apparatus further comprises a selection unit for selecting a display mode of the thumbnail image according to the identified importance level. The apparatus further comprises a generation unit for generating information controlling display of the thumbnail image according to the selected display mode.

In another aspect, there is provided a method for displaying thumbnail images corresponding to portions of content. The method comprises identifying a thumbnail image representing a portion of content. The method further comprises identifying an importance level of the content represented by the thumbnail image. The method further comprises selecting a display mode of the thumbnail image according to the determined importance level. The method further comprises displaying the thumbnail image according to the selected display mode.

In another aspect, there is provided a tangibly embodied non-transitory computer-readable storage medium storing instructions which, when executed by a processor, cause a computer to perform a method for displaying thumbnail images corresponding to portions of content. The method comprises identifying a thumbnail image representing a portion of content. The method further comprises identifying an importance level of the content represented by the thumbnail image. The method further comprises selecting a display mode of the thumbnail image according to the determined importance level. The method further comprises displaying the thumbnail image according to the selected display mode.

According to the embodiments described above, the display method of the thumbnail can be changed according to the degree of importance of the thumbnail.

Embodiments of the invention will now be described with reference to the accompanying drawings, throughout which like parts are referred to by like references, and in which:
FIG. 1 is an overall configuration diagram of a terminal according to first and second embodiments;
FIG. 2 is a view showing a variant of the overall configuration;
FIG. 3 is a view showing one example of a content storage unit according to a first embodiment;
FIG. 4 is a view showing a display example of the thumbnails according to the first embodiment;
FIG. 5 is a flowchart showing the display method of the thumbnails according to the first embodiment;
FIG. 6 is a flowchart showing the display method of the thumbnails according to the first embodiment;
FIG. 7 is a flowchart showing the display method of the thumbnails according to the first embodiment;
FIG. 8 is a view showing a display example of the thumbnails according to the first embodiment;
FIG. 9 is a view showing a display example of the thumbnails according to the first embodiment;
FIG. 10 is a view showing a display example of the thumbnails according to the first embodiment;
FIG. 11 is a view showing a display example of the thumbnails according to the first embodiment;
FIG. 12 is a view showing a display example of the thumbnails according to the first embodiment;
FIG. 13 is a view showing one example of a content storage unit according to a second embodiment; and
FIG. 14 is a view showing a display example of the thumbnails according to the second embodiment.

Hereinafter, exemplary embodiments will be described in detail with reference to the appended drawings. Note that, in this specification and the appended drawings, structural elements that have substantially the same function and structure are denoted with the same reference numerals, and repeated explanation of these structural elements is omitted.

Embodiments will be described in the following order.
1. <First embodiment>
   [Configuration of terminal]
   (Evaluation of content)
   (Scroll of thumbnail list)
   [First display process of terminal]
   [Second display process of terminal]
   [Third display process of terminal]
   [First variant in display of thumbnail]
   [Second variant in display of thumbnail]
   [Third variant in display of thumbnail]
   [Fourth variant in display of thumbnail]
2. <Second embodiment>

### <First embodiment>

### [Configuration of terminal]

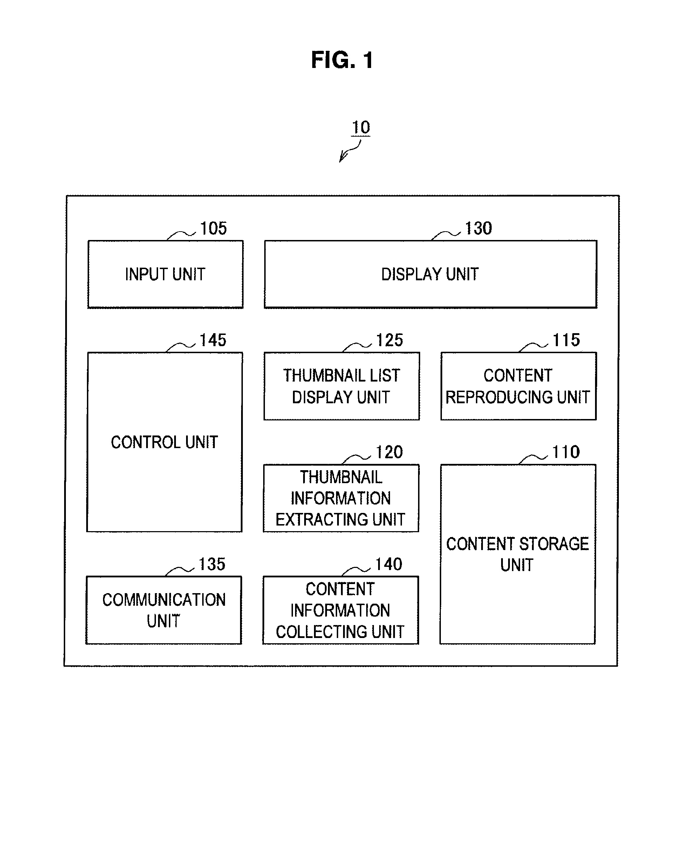

First, a schematic configuration of a terminal according to a first embodiment will be described with reference to FIG. 1. A terminal 10 is an example of a display device for displaying thumbnails and contents, where the display device may be a PC, a recorder, a portable terminal, a PDA, or other electronic devices.

The terminal 10 includes an input unit 105, a content storage unit 110, a content reproducing unit 115, a thumbnail information extracting unit 120, a thumbnail list display unit 125, a display unit 130, a communication unit 135, a content information collecting unit 140, and a control unit 145. As used herein the term "unit" may be a software module, a hardware module, or a combination of a software module and a hardware module.

The input unit 105 accepts input data according to the operation of the user. Various devices can be used for the input means from the user, and may be that in which the input unit 105 is separated such as a remote controller, or that in which all the blocks are incorporated in one terminal such as a portable terminal mounted with a touch panel. Thus, various methods are also considered for the input method of the user such as pushing a button, touching a screen, gesture and the like. An overall block diagram of FIG. 1 covers all such inputs.

The content storage unit 110 stores contents and thumbnails extracted from the content. The content reproducing unit 115 reproduces the content according to the operation of the user.

The thumbnail information extracting unit 120 extracts a plurality of thumbnails based on a certain rule from the content stored in the content storage unit 110. The plurality of thumbnails is extracted to represent the flow of content of the content in fragments. The terminal 10 according to the present embodiment extracts the thumbnail from the moving image content according to a certain rule, and appropriately displays the thumbnail based on the information of the content of the content according to the input from the user. Various techniques have been proposed for the extraction of thumbnails. One of the techniques may be used for the method of extracting the thumbnail, and the aspect of "changing the display method of the plurality of thumbnails in accordance with the degree of importance of the thumbnail", which is the characteristic portion of the present embodiment, will be centrally described in the present embodiment.

The thumbnail list display unit 125 changes the display method of the plurality of thumbnails by the instruction of the user accepted by the input unit 105 or the degree of importance of the thumbnail. The display unit 130 (i.e., a generation unit) generates information for controlling display of a list of thumbnails, and reproduces the content images. The communication unit 135 transmits and receives data with another device on the network. The content information collecting unit 140 collects information regarding the content from the network through the communication unit 135. The content information collecting unit 140 also evaluates the plurality of thumbnails extracted from the content, and gives an importance degree for every thumbnail. The control unit 145 controls the entire processes.

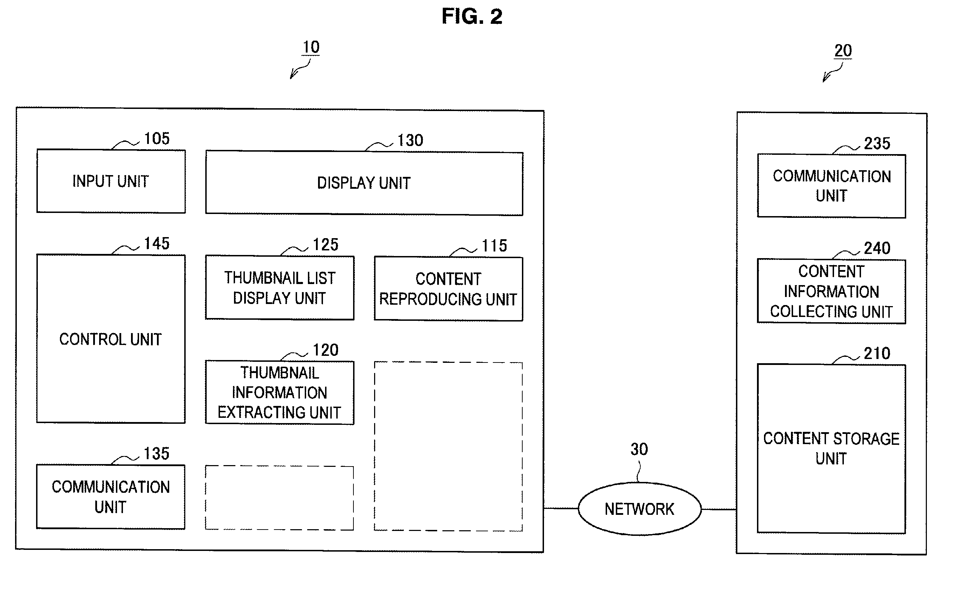

In FIG. 1, the content storage unit 110 and the content information collecting unit 140 are assumed to be in the terminal. However, if the information regarding the content is all provided as a service on the network 30, the relevant units may be configured as shown in the block diagram of FIG. 2, which is a variant of FIG. 1.

In other words, the content storage unit 110 and the content information collecting unit 140 shown in FIG. 1 may be replaced with a content storage unit 210 and a content information collecting unit 240 in an electronic device 20 on the network in FIG. 2. In this case, the terminal 10 acquires the data regarding the content from the content storage unit 210 and the content information collecting unit 240 by having the communication unit 135 of the terminal 10 and the communication unit 235 of the electronic device 20 transmit and receive data.

Furthermore, in certain embodiments, various units of terminal 10 and electronic device 20 may be embodied in one or more devices or servers. Furthermore, it is to be appreciated that the functionality of any single unit may be performed by a plurality of units. For example, functions associated with thumbnail list display unit 125 may performed by separate units, such as an identifying unit and a selection unit. Alternatively, one or more of thumbnail information extracting unit 120, thumbnail list display unit 125, content information collecting unit 240 may be embodied in different devices or servers in a cloud computing configuration. The description of the present embodiment will be continued using the content storage unit 110 and the content information collecting unit 140 shown in FIG. 1.

### (Evaluation of content)

In the present embodiment, the content information collecting unit 140 first analyzes the content of the content stored in the content storage unit 110 and marks the scene of high importance (e.g., exciting scene) before the display process of the thumbnails. The means for detecting the exciting scene includes using the technique described in Japanese Patent Application Laid-Open No. 2004-191780 for the method of using the audio information. If there is an index (e.g., viewer rating by scene) for measuring the attention degree of the moving image content, such index may be used. Furthermore, Japanese Patent Application Laid-Open No. 2008-228134 discloses a technique of acquiring a face thumbnail using a frame including a face of a character from a moving image recorded unit scene, and displaying the same. With such technique, high importance degree can be given to the face thumbnail image. Therefore, the content information collecting unit 140 can use various related arts to detect the scene of high importance. Assuming the importance by scene (thumbnail) can be evaluated with the content itself or through the network, a point is given to each scene (each thumbnail) as "degree of importance".

Such evaluation task of the importance degree may be carried out any time as long as it is before the reproduction of the content, and may be carried out in the background when accessing the list of contents, or may be realized by periodically scrolling the content storage unit 110.

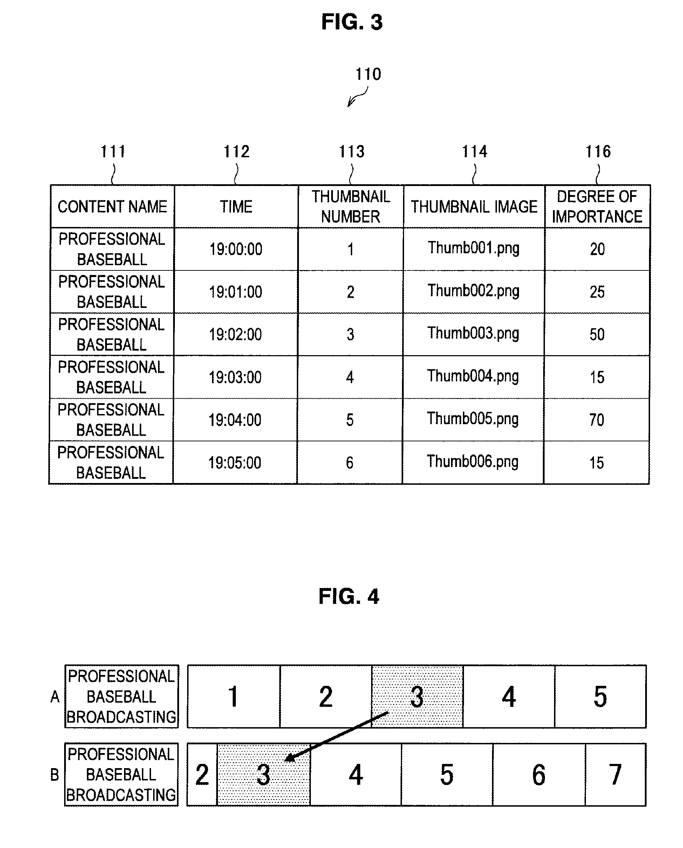

FIG. 3 shows an example in which the result of evaluating the importance degree of the content by the content information collecting unit 140 is stored in the content storage unit 110. The content storage unit 110 stores a content name 111, a time 112, a thumbnail number 113, a thumbnail image 114, and an importance degree 115. As described above, the content information collecting unit 140 analyzes the exciting scene (e.g., score by homerun) in the content "professional baseball" program saved in the content storage unit 110 and evaluates the importance degree (transition in 0 to 100) every other minute. The results are saved in the content storage unit 110, and can be acquired any time by the input from the user. It can be seen that the most exciting scene is the thumbnail number five (importance degree 70) and the next exciting scene is the thumbnail number three (importance degree 50).

### (Scroll of thumbnail list)

FIG. 4A shows a state in which five thumbnails of "professional baseball broadcasting" of the moving image content are displayed. The time advances towards larger number or towards the right. When the user instructs the rightward direction in this state, the third thumbnail slightly moves to the left side and the fifth thumbnails comes near the center, as shown in FIG. 4B. The method the user instructs the instruction may be any method and may include various methods such as pushing the right button, instructing right with a gesture, placing the finger on the touch panel and flicking towards the right, tilting the portable device towards the right.

### [First display process of terminal]

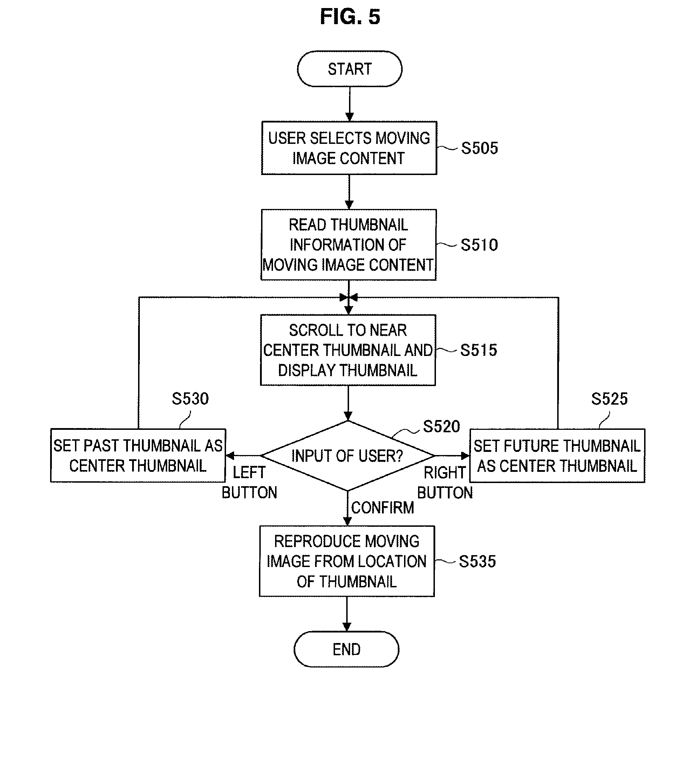

The flowchart of the display process according to the present embodiment is shown in FIG. 5. The operation of FIG. 5 assumes the user first selecting a moving image content, selecting a scene from the thumbnail list by the button operation, and reproducing the moving image content from the selected scene.

When the user first selects a certain moving image content (S505), the thumbnail list display unit 125 (i.e., an identifying unit) reads the thumbnail information of the selected moving image content according to the input operation (S510). The thumbnail list display unit 125 then displays the thumbnail by scrolling to the vicinity of the center thumbnail (S515). For instance, the thumbnail of the thumbnail number three is displayed at the center in the state of FIG. 4A.

The thumbnail list display unit 125 then determines the input operation of the user (S520), where the future thumbnail (thumbnail positioned on the right side in FIG. 4A) is the center thumbnail if the input of the user is the right button (S525). For instance, the thumbnail displayed at the center changes from the thumbnail number three to the thumbnail number five in the state of FIG. 4B. In this case, the thumbnail list display unit 125 preferably displays a plurality of thumbnails such that the thumbnail of high importance degree is displayed at the center of the screen than the thumbnail of low importance degree.

If the input of the user is the left button, the past thumbnail (thumbnail positioned on the left in FIG. 4A) is the center thumbnail (S5530). Furthermore, if the input of the user is the determination button, the moving image content is reproduced from the position (location) of the displayed thumbnail (S535).

Thus, the thumbnail list display unit 125 displays a plurality of thumbnails while changing the display positions of the plurality of thumbnails according to the instruction of the user or according to the importance degree. The important scene (thumbnail) is thus displayed on the center side, as shown in FIG. 4A and FIG. 4B, and thus is easy to see and is likely to be given attention. The user then can browse through the list of thumbnails so as not to miss the detailed content in the important scene (thumbnail) displayed on the center side while quickly grasping the entire flow of the content of the content.

### [Second display process of terminal]

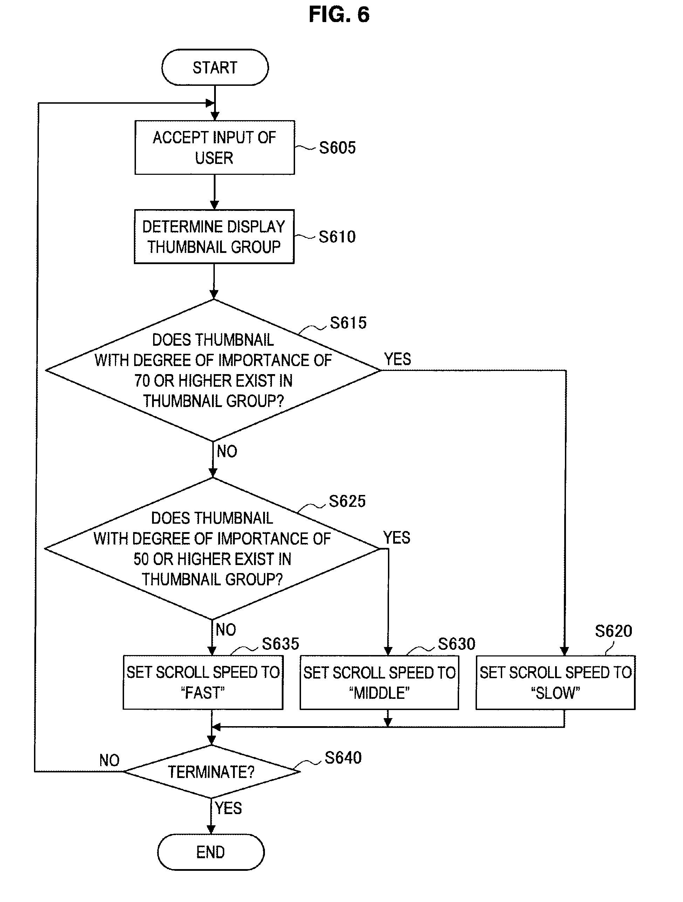

In FIG. 6, "scroll to vicinity of center thumbnail and display thumbnail" of S515 in the operation block of FIG. 5 is improved. In this example, the display method of the plurality of thumbnails is changed by changing the scroll speed according to the importance degree.

First, when accepting the input of the user (S605), the thumbnail list display unit 125 determines the thumbnail group to display according to the input operation (S610). The thumbnail list display unit 125 then determines whether or not the thumbnail in which the importance degree is higher than or equal to 70 exists in the thumbnail group to be displayed (S615). The speed at which to scroll the thumbnail is slowed if the thumbnail in which the importance degree is higher than or equal to 70 exists (S620).

If the thumbnail in which the importance degree is higher than or equal to 70 does not exist in S615, the thumbnail list display unit 125 determines whether or not the thumbnail in which the importance degree is higher than or equal to 50 exists in the thumbnail group to be displayed (S625). If the thumbnail in which the importance degree is higher than or equal to 50 exists, the scroll speed of the thumbnail is set to medium degree (S630).

If the thumbnail in which the importance degree is higher than or equal to 50 does not exist in S625, the thumbnail list display unit 125 increases the scroll speed of the thumbnail (S635). Whether the display of the list of thumbnails is terminated is determined (S640), and the process returns to S605 and the processes of S605 to S640 are repeated until determined that the operation of displaying the thumbnail with the scroll speed changed is terminated.

In FIG. 6, a rule of slowing the scroll speed if the importance degree is higher than or equal to 70, setting the scroll speed of medium degree if the importance degree is higher than or equal to 50 and lower than 70, and increasing the scroll speed if the importance degree is lower than 50 is provided as a reference example of evaluating the importance degree.

In the normal thumbnail automatic scroll, the thumbnail is generally scrolled in the time axis direction by the way of pushing the button, the strength of flick and the like. In such a case, the speed of the scrolling is constant or is an extent of being increased or decreased by inertia.

In the present embodiment, on the other hand, the thumbnail list display unit 125 displays a plurality of thumbnails while changing the scroll speed of the plurality of thumbnails according to the importance degree. More specifically, the thumbnail list display unit 125 displays the plurality of thumbnails so that the thumbnail of high importance degree is scrolled slower than the thumbnail of low importance degree. In other words, devisal is made such that the scroll speed is slowed when the thumbnail of high importance degree is displayed, and increasing the scroll speed when the thumbnail of low importance degree is displayed.

The scroll speed thus can be changed so that an important scene can be easily identified while automatically scroll displaying the thumbnails of the moving image content smoothly in accordance with the input (remote controller, gesture, tap, etc.) of the controller. For instance, the important scene (thumbnail) is displayed slowly for a long time, and thus is easy to see and is easily given attention. Thus, the user can browse through the list of thumbnails so as not to miss the detailed content in the important scene (thumbnail) while quickly grasping the entire flow of the content of the content.

A variant of further increasing the changing stage of the scroll speed is also considered. A variant of setting the scroll speed to zero, that is, stopping scrolling when a very important thumbnail is displayed is also considered.

### [Third display process of terminal]

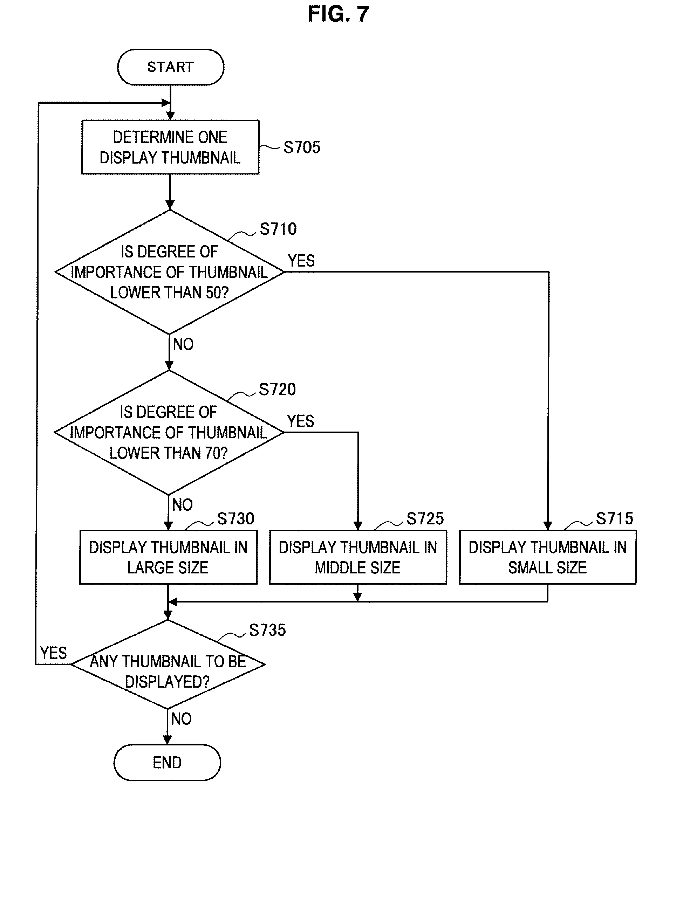

FIG. 6 is an algorithm of scroll displaying the entire thumbnail group. FIG. 7, on the other hand, is an algorithm for displaying each thumbnail. The thumbnail in the display region is drawn one at a time during scrolling, where the display size of the thumbnail is changed according to the importance degree in FIG. 7.

First, the thumbnail list display unit 125 determines one thumbnail to display according to the input operation of the user (S705). The thumbnail list display unit 125 then determines whether the importance degree of the determined thumbnail is lower than 50 (S710). The thumbnail is displayed in small size if the importance degree of the thumbnail is lower than 50 (S715).

If the importance degree of the thumbnail is higher than or equal to 50 in S710, the thumbnail list display unit 125 determines whether the importance degree of the thumbnail is lower than 70 (S720). The thumbnail is displayed in medium size if the importance degree of the thumbnail is lower than 70 (S725).

If the importance degree of the thumbnail is higher than or equal to 70 in S720, the thumbnail display unit 125 displays the thumbnail in large size (S730). Whether there are other thumbnails to be displayed is then determined (S735), and the process returns to S705 to repeat the processes of S705 to S735 until there are no more thumbnails to be displayed.

In the display process of FIG. 7, the thumbnail list display unit 125 displays a plurality of thumbnails while changing the display size according to the importance degree. Here, the thumbnail list display unit 125 is controlled so that the thumbnail of high importance degree is displayed larger than the thumbnail of low importance degree.

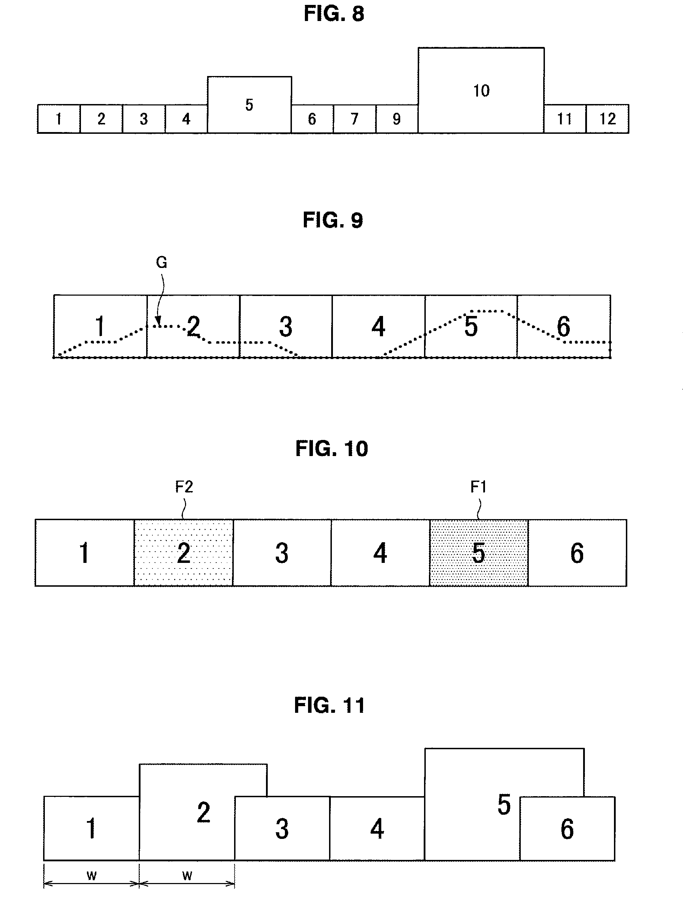

Using the importance degree of the thumbnail, similar to FIG. 6, the thumbnail is displayed in small size if the importance degree is lower than 50, in normal size is higher than or equal to 50 and lower than 70, and in large size if higher than or equal to 70. An example in which the thumbnail is actually displayed based on such algorithm is shown in FIG. 8. In FIG. 8, assume that the thumbnail number five has an importance degree of 55, and the thumbnail number ten has an importance degree of 80. The thumbnail of high importance degree is displayed large by changing the display size of the list of thumbnails as in FIG. 8. Thus, the user can easily notice the important scene while scrolling the list of thumbnails.

### [First variant in display of thumbnail]

First to fourth variants in the display of the thumbnail described above will now be described with reference to FIG. 9 to FIG. 12. In the first variant in display of thumbnail, the thumbnail list display unit 125 forms a graph of the importance degree and displays the same with a plurality of thumbnails. In FIG. 9, a state in which the importance degree is display in a graph G, and overlaid on the list of thumbnails is shown. This can also be realized using the algorithm of the display process shown in FIG. 7. The important scene can be distinguished at a glance without changing the size of the thumbnail by displaying the graph G. It can be recognized here that the thumbnail number five is the most important scene, and the thumbnail number two is the next important scene. The user can easily notice the important scene while scrolling the list of thumbnails since the magnitude of the importance degree for every thumbnail is visually represented using the curve of the graph.

### [Second variant in display of thumbnail]

In the second variant in the display of the thumbnail, the thumbnail list display unit 125 displays a plurality of thumbnails while changing the display color of the plurality of thumbnails according to the importance degree. For instance, FIG. 10 covers a filter F (F1, F2) of transmissive color on a thumbnail image, and shows the importance degree with the shading of the color. Similar to FIG. 9, it can be recognized that the thumbnail number five shown with the color of the filter F1 is the most important scene, and the thumbnail number two shown with the color of the filter F2 is the next important scene. Therefore, the user can easily notice the important scene while scrolling the list of thumbnails since the magnitude of the importance degree for every thumbnail is visually represented using color.

### [Third variant in display of thumbnail]

In the third variant in the display of the thumbnail, the thumbnail list display unit 125 displays a plurality of thumbnails while overlapping the displays of the plurality of thumbnails. For instance, FIG. 11 shows an example in which the thumbnails of important scenes (thumbnail number five and thumbnail number two) are overlapped on other thumbnails and displayed in an enlarged manner without changing the horizontal width W of the entire thumbnail image group. Such display method may be effective as the horizontal direction may have one thumbnail explicitly showing the time width.

### [Fourth variant in display of thumbnail]

In the fourth variant in the display of thumbnail, a plurality of thumbnails extracted with respect to a plurality of contents is collectively displayed. That is, the thumbnail information extracting unit 120 extracts a plurality of thumbnails with respect to a plurality of contents. The thumbnail list display unit 125 collectively displays the plurality of thumbnails extracted with respect to the plurality of contents while changing the display method according to the importance degree.

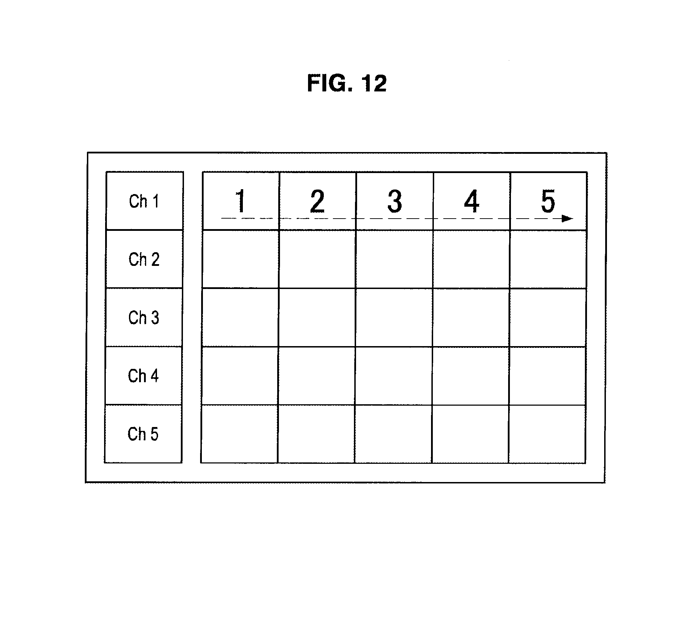

For instance, FIG. 12 shows an example in which the television programs of a plurality of channels are simultaneously thumbnail displayed. In this variant as well, the display method of the thumbnail of each content is changed according to the importance degree. Thus, a merit of grasping the flow of content of a great number of channels simultaneously and easily can be expected.

As the number of channels and the total number of contents are increasing with the popularization of digital television and video sites, the mechanism and the user interface for searching the desired scene of the desired content are become important. Through the use of the present embodiment with respect to such situation, the important scene can be easily found while grasping the flow of contents of the plurality of contents.

The various types of thumbnail display methods shown in the first embodiment can be arbitrarily combined, and further changes can be made to the method of displaying the list of thumbnails according to the combination. For instance, when displaying the thumbnail of high importance degree, the scroll speed may be slowed while enlarging the display size of the thumbnail. A great advantage in that the important scene will not be missed can be expected.

### <Second embodiment>

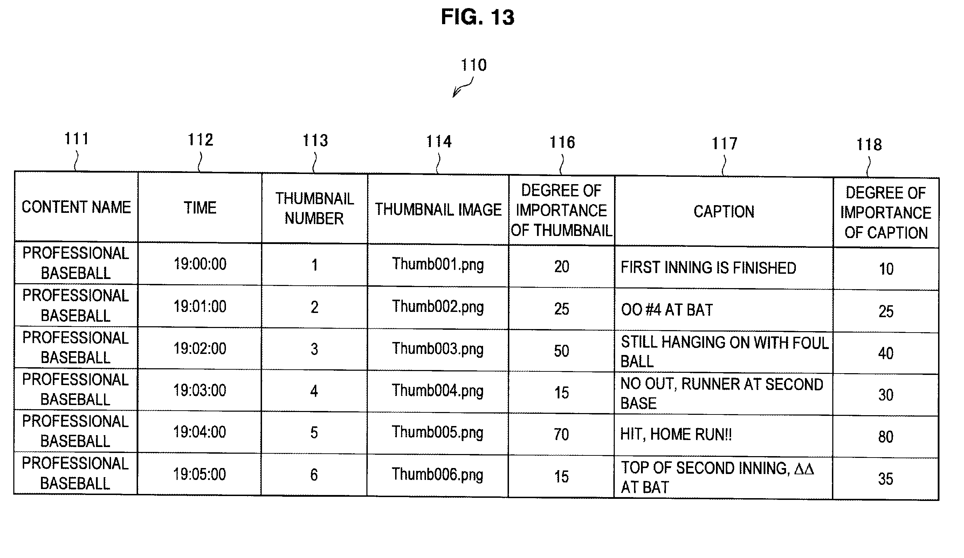

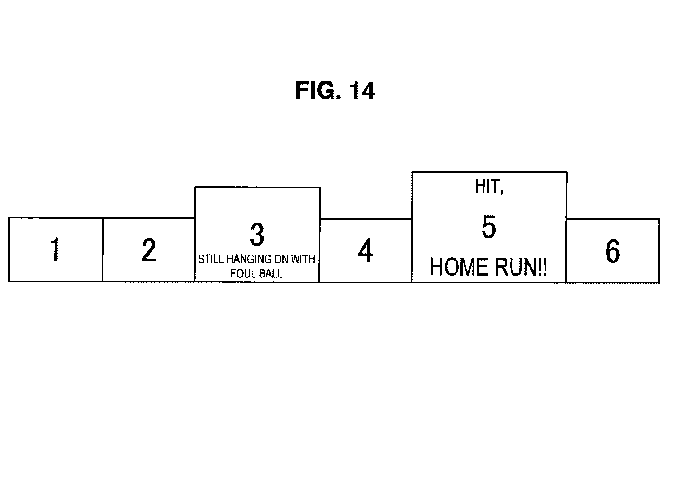

The operation of the terminal 10 according to the second embodiment will be described with reference to FIG. 13 and FIG. 14. The second embodiment differs from the first embodiment, in which the importance degree is provided with respect to the image of the thumbnail, in that the importance degree is provided with respect to the image and the caption of the thumbnail. FIG. 13 shows an example in which the result of evaluating two types of importance degree is stored in the content storage unit 110.

The content storage unit 110 further stores a caption 117 and a caption importance degree 118, in addition to the content name 111, the time 112, the thumbnail number 113, the thumbnail image 114, and the thumbnail importance degree 116. The content information collecting unit 140 analyzes the exciting scene (e.g., score by homerun) in the content "professional baseball" program saved in the content storage unit 110 with respect to the image and the caption, and evaluates as the importance degree every other minute. The result is stored in the content storage unit 110 as the thumbnail importance degree 116 and the caption importance degree 118.

The thumbnail list display unit 125 changes the display method of a plurality of thumbnails according to the importance degree (thumbnail importance degree 116) of the image of the thumbnail and the importance degree of the caption (caption importance degree 118) given by the content information collecting unit 140.

In FIG. 14, the display size of the thumbnail is changed according to the thumbnail importance degree 116 to display, and the size of the caption displayed in each thumbnail is changed according to the caption importance degree 118 to display in the thumbnail. It can be recognized that the scene on the most exciting image is the thumbnail number five, and the next exciting image is the thumbnail number three. It can also be recognized that the thumbnail number 5 is the most exciting scene from the size of the caption. The display is not made for those in which the caption importance degree 118 is lower than 40.

Only the importance degree of the thumbnail image is used in the first embodiment, but the important scene can be easily identified from the image and the caption thumbnail while grasping the flow of content of the moving image content by changing the display method of a plurality of thumbnails according to the importance degree of the image of the thumbnail importance degree 116) and the importance degree of the caption (caption importance degree 118).

In the second embodiment, the importance degree of the thumbnail image and the importance degree of the caption may take completely different values without coordinating with other. Thus, the display method of the caption is controlled separate from the display method of the thumbnail image using the flow similar to the operation flow of FIG. 7 for changing the display size of the thumbnail image.

As described above, according to each embodiment, a user interface and a system in which an important scene (thumbnail) can be easily identified and the entire content can be viewed in a list while grasping the flow of content of the content can be provided.

In the related art, the entire thumbnail had to be scrolled at high speed when desiring to rapidly grasp the flow of content of the moving image content, in which case the detailed content tends to be missed. Through the use of the display method according to the present embodiment, however, an effect in that the detailed content of the important scene will not be missed can be expected since the mark up display where the scroll speed is slowed for the important scene, the important scene is displayed large, and the like can be performed even during the high speed scrolling.

The value of the moving image in continuation and frame-by-frame advance of the still image in addition to reproducing the moving image is assumed to enhance when the operability of the touch panel mounted device and the controller is enhanced. The utility value of the present embodiment is thus assumed to be high in realizing a style of viewing the moving image by scroll.

The command to each unit of each embodiment is executed by a dedicated control device or a CPU (not shown) for executing programs or instructions. The program for executing the display processing flow is stored in advance in, for example, a tangibly embodied non-transitory computer-readable storage medium, such as a ROM or other non-volatile memory (both not shown), where the CPU reads the programs or instructions from the memory and executes the same to realize each function of each unit.

In first to third embodiments, the operation of each unit is associated to each other, and can be replaced as a series of operations and a series of processes in view of the association with each other. The embodiment of the display device (terminal) thus may become the embodiment of the display method and the embodiment of a program for causing the computer to realize the function of the display device.

A display method including a step in which the thumbnail information extracting unit extracts a plurality of thumbnails from a content, a step in which the content information collecting unit evaluates the plurality of thumbnails extracted from the content and gives an importance degree for every thumbnail, and a step in which the thumbnail list display unit changes the display method of the plurality of thumbnails according to the importance degree is thus provided.

A program for causing a computer to execute a process in which the thumbnail information extracting unit extracts a plurality of thumbnails from a content, a process in which the content information collecting unit evaluates the plurality of thumbnails extracted from the content and gives an importance degree for every thumbnail, and a process in which the thumbnail list display unit changes the display method of the plurality of thumbnails according to the importance degree is thus provided.

It should be understood by those skilled in the art that various modifications, combinations, sub-combinations and alterations may occur depending on design requirements and other factors insofar as they are within the scope of the appended claims or the equivalents thereof.

For instance, the degree of excitement, the degree of popularity (viewer rating), and the like are mentioned for the method of calculating the importance degree in the embodiment described above, but embodiments are not limited to such an example, and an application such as a surveillance camera can also be assumed. For instance, if the importance degree of the thumbnail of the scene where a suspicious individual is found while monitoring with the surveillance camera is raised, it can be displayed in an emphasizing manner when observing in a list.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present application claims priority to and contains subject matter related to that disclosed in Japanese Priority Patent Application JP 2010-107358 filed in the Japan Patent Office on May 7, 2010, the entire content of which is hereby incorporated by reference.

## Claims

1. An apparatus, comprising:
an identifying unit for identifying:
a thumbnail image representing a portion of content; and
an importance level of the portion of content represented by the thumbnail image;
a selection unit for selecting a display mode of the thumbnail image according to the identified importance level; and
a generation unit for generating information controlling display of the thumbnail image according to the selected display mode.

2. The apparatus of claim 1, comprising:
a storage unit storing a plurality of thumbnail images representing different portions of the content, wherein the identified thumbnail image is included in the thumbnail images.

3. The apparatus of claim 1, comprising:
an extraction unit for extracting, from the content, a plurality of thumbnail images representing different portions of the content; and
an evaluation unit for evaluating the thumbnail images to assign importance levels to the thumbnail images.

4. The apparatus of claim 3, wherein the evaluation unit analyzes at least one of images or captions associated with the different portions of the content to assign importance levels to the thumbnail images.

5. The apparatus of claim 4, wherein the generation unit generates information causing the thumbnail images to be arranged in a timeline representing flow of the content, and to be displayed according to selected display modes based on the assigned importance levels of the thumbnail images.

6. The apparatus of claim 5, wherein the generation unit:
generates information controlling display of a plurality of channels of content; and
generates information controlling display of a plurality of thumbnail images,
corresponding to the channels of content, as timelines representing flow of the content.

7. The apparatus of claim 1, wherein the generation unit generates information controlling display of a thumbnail image according to at least one of:
changing the display size of the thumbnail image;
changing a scrolling speed of the thumbnail image;
changing a position of the thumbnail image;
changing display of a caption associated with the thumbnail image;
changing a color of the thumbnail image;
providing a graph indicating of the thumbnail image; or
allowing overlap of the thumbnail image.

8. The apparatus of claim 7, wherein the generation unit generates information causing the display size of the thumbnail image to be increased when the identified importance level is high, and to be decreased when the identified importance level is low.

9. The apparatus of claim 7, wherein generation unit generates information causing the scrolling speed of the thumbnail image to be slower when the identified importance level is high, and faster when the identified importance level is low.

10. The apparatus of claim 7, wherein the generation unit generates information causing a position of a thumbnail image having a highest importance level from among a plurality of displayed thumbnail images to be changed to be near a center of the displayed thumbnail images.

11. A method for displaying thumbnail images corresponding to portions of content, comprising:
identifying, by a processor, a thumbnail image representing a portion of content;
identifying, by the processor, an importance level of the content represented by the thumbnail image;
selecting a display mode of the thumbnail image according to the determined importance level; and
displaying the thumbnail image according to the selected display mode.

12. A tangibly embodied non-transitory computer-readable storage medium storing instructions which, when executed by a processor, cause a computer to perform a method comprising:
identifying a thumbnail image representing a portion of content;
identifying an importance level of the content represented by the thumbnail image;
selecting a display mode of the thumbnail image according to the determined importance level; and
displaying the thumbnail image according to the selected display mode.
